# EUROPEAN PATENT SPECIFICATION

(11) **EP 3 481 559 B1**
(45) Date of publication and mention of the grant of the patent: **29.05.2024**
(21) Application number: 17737912.0
(22) Date of filing: 04.07.2017
(51) Int. Cl.: B05B 15/55, B05C 7/02, B05C 11/10, B05C 7/08, B05B 13/06, F16L 55/1645

(54) **METERING DEVICE FOR METERING OF A SEALANT FOR SEALING A SEWER WALL, SYSTEM PROVIDED WITH THE METERING DEVICE, USE OF THE METERING DEVICE, METHOD FOR SEALING A SEWER AND A SEWER OBTAINED USING THE METHOD**
DOSIERVORRICHTUNG ZUM DOSIEREN EINES DICHTUNGSMITTELS ZUM ABDICHTEN EINER ABWASSERKANALWAND, SYSTEM MIT DER DOSIERVORRICHTUNG, VERWENDUNG DER DOSIERVORRICHTUNG, VERFAHREN ZUM ABDICHTEN EINES ABWASSERKANALS UND MIT DEM VERFAHREN HERGESTELLTER ABWASSERKANAL
DISPOSITIF DE MESURE POUR MESURER UN PRODUIT D'ÉTANCHÉITÉ POUR SCELLER UNE PAROI D'ÉGOUT, SYSTÈME POURVU DU DISPOSITIF DE MESURE, UTILISATION DU DISPOSITIF DE MESURE, PROCÉDÉ POUR SCELLER UN ÉGOUT ET ÉGOUT OBTENU À L'AIDE DU PROCÉDÉ

(30) Priority: 07.07.2016 NL 2017127
(43) Date of publication of application: 15.05.2019
(73) Proprietor: Van Wieringen, Patricia Martina Maria, 5503 SJ Veldhoven (NL)
(72) Inventor: DE JONG, Bob, 5503 SJ Veldhoven (NL); DE JONG, Iddo, 5503 SJ Veldhoven (NL)
(74) Representative: V.O.
(86) International application number: PCT/NL2017/050443
(87) International publication number: WO 2018/009061

(56) References cited:
- EP-A1- 3 085 457
- WO-A1-2013/095143
- WO-A1-2016/071633
- DE-A1- 3 913 317
- DE-A1- 19 823 398
- DE-U1- 9 212 893

## Description

According to a first aspect, the invention relates to a metering device according to claim 1, the metering device being for metering a sealant for sealing a sewer wall, the metering device comprising a housing which is provided with a sealant supply and a sealant discharge, wherein the sealant supply is configured for supplying sealant to a supply space provided in the housing and the sealant discharge is configured for discharging sealant from the supply space and supplying it to the sewer wall, wherein an inhibiting device is provided for inhibiting the supply of sealant from the supply space to the sealant supply.

According to a second aspect, the present invention relates to a system for sealing a sewer wall according to claim 3, the system being provided with a metering device according to the first aspect of the present invention.

According to a third aspect, the present invention relates to the use of the metering device according to claim 7, the metering device being according to the first aspect of the present invention for sealing a sewer wall.

According to a fourth aspect, the present invention relates to a method for sealing a sewer according to claim 8.

DE3913317 describes a method for the partial repair of defective, non-accessible conduit cross-sections with injectables based on silicate resins, in which the defective duct section in both directions is limited by a packer that can be braced against the canal wall and has at least two bracing sleeves, and then the injection agent in the closed space between the bracing sleeves is pressed in, wherein the two components of the silicate resin are pumped separately into the packer, a high pressure counter current mixing is carried out in the packer by discontinuously bringing together both components and wherein both components are then supplied to to an annular space.

It is a known problem that a sewer wall, such as for example a sewer pipe wall or a sewer drain, can develop cracks, due to, for example, subsidence of the sewer or the impact of tree roots. For sealing such cracks, systems are known which are provided with a metering device for metering a sealant for sealing the sewer wall. With these known metering devices, the sealant can be supplied to a sewer wall via a housing and a hose. A drawback of the known metering devices is the fact that it is relatively laborious to seal a sewer.

It is therefore an object of the present invention to provide a metering device for sealing a sewer wall in a relatively less laborious manner.

In a first aspect, this object is achieved by the metering device according to the first aspect of the present invention wherein the metering device is according to Claim 1.

The invention is based, at least partly, on the insight that a sewer has to be sealed relatively often at several locations along the length of the sewer. During repair of a sewer at several locations, the metering device has to be removed from the sewer after a repair has been performed at a specific location and has to be provided with a clean sealant discharge. Sealant which is situated at a specific location in the supply space and the sealant discharge after a sewer has been repaired, results in a closure of the supply space and the sealant discharge, as a result of which a repair of the sewer at a further location is usually not readily possible. By providing a flushing agent supply, removal of sealant which is present in the supply space and sealant discharge can be achieved, as a result of which it is relatively less laborious to achieve a sealing of the wall.

In the first aspect, the sealant supply comprises a first sealant supply and a second sealant supply which are configured for separately supplying a first sealant component via the first sealant supply and a second sealant component via the second sealant supply to the supply space. This is advantageous when using a sealant which comprises two components, with the two components producing a curing sealant during mixing or after having been mixed.

In the first aspect the supply space comprises a first supply space and a second supply space which is separate from the first supply space, wherein the first sealant supply is configured for supplying a first sealant component to the first supply space and the second sealant supply is configured for supplying a second sealant component to the second supply space.

In this case, it is advantageous if the inhibiting device comprises a first inhibiting element and a second inhibiting element, wherein the first inhibiting element is configured for inhibiting the supply of sealant from the supply space to the first sealant supply and the second inhibiting element is configured for inhibiting the supply of sealant from the supply space to the second sealant supply. This is advantageous for keeping the first sealant component and the second sealant component on a part of the sealant supply adjoining the supply space reliably separated.

According to the second aspect, the present invention relates to a system for sealing a sewer wall comprising a metering device according to the first aspect of the present invention, a sealant supply device which is configured for supplying sealant to the metering device, a flushing agent supply device which is configured for supplying flushing agent to the supply space of the metering device and a sealing device which is configured for sealing the wall from a space surrounded by the sewer wall. The advantages of this system are analogous to the advantages of the metering device according to the first aspect of the present invention.

In a practical embodiment, the system is provided with a conveyor means which is configured for conveying the sealing device through the sewer. Such a conveyor means is advantageous for sealing a sewer wall in a relatively less laborious manner, since the sealing device can be conveyed to one or several locations of a sewer to be repaired.

It is advantageous if the sealing device comprises a bearing member which is configured for sealingly bearing against the wall, substantially in a peripheral direction, wherein the bearing member is connected to the sealant discharge for supplying sealant to a part of the wall delimited by the bearing member. Such a bearing member is advantageous in order to produce, together with the wall to be repaired, a delimited space which can be filled with sealant by supplying sealant from the metering opening via the sealant discharge.

It is advantageous if the bearing member comprises an inflatable body which is configured to bear against the wall in its inflated state. Such a bearing member preferably comprises an expandable flexible wall which can bear against the wall by expanding the bearing member.

In a practical embodiment, the flushing agent supply device is provided with pressure means and heating means for supplying a pressurized heated flushing agent to the metering device.

According to the third aspect, the present invention relates to a use of the metering device according to the first aspect of the present invention for sealing a sewer wall. The advantages of the use are analogous to the advantages of the metering device.

According to the fourth aspect, the present invention relates to a method for sealing a sewer according to claim 8.

The advantages of the method of the fourth aspect are analogous to the advantages of the metering device according to the first aspect of the present invention and the system according to the second aspect of the present invention.

In this case, it is advantageous if the sealing device is displaced in the sewer after step d) or e) and the steps a) to d) are carried out again. This is advantageous if the sewer has to be sealed at several locations along the length of a sewer. By using the present method, a sewer can be repaired at several locations without having to replace the sealant discharge. As a result thereof, a sewer wall can be sealed at several locations in a relatively less laborious manner.

In a practical embodiment of the method, the flushing agent has a temperature in the range from 50 to 90 degrees Celsius during step e). A temperature in this range is advantageous for removing sealant which is situated in a supply space and a sealant discharge of the metering device.

It is advantageous if the flushing agent is supplied at a pressure in the range from 60 to 200 bar to the metering device during step e). At a pressure in this range, satisfactory removal of the sealant from the supply space and the sealant supply can be achieved.

It is advantageous if the flushing agent comprises water during step e). Preferably, the flushing agent substantially consists of water. Water is advantageous in order to be able to discharge the flushing agent via the sewer.

In an embodiment of the method, it is advantageous if a first sealant component comprises a resin, preferably a synthetic resin, and a second sealant component comprises a hardener. Such a sealant is advantageous in order to achieve a relatively strong sealing of the sewer wall in a reliable manner.

The present invention will be explained below by means of the description of a preferred embodiment of a metering device according to the first aspect of the present invention and a preferred embodiment of a method according to the fourth aspect of the present invention, with reference to the following diagrammatic figure, in which:

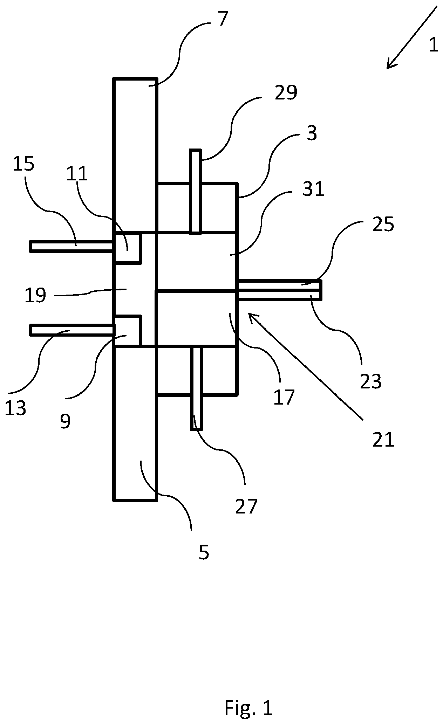

Fig. 1 diagrammatically shows a metering device according to the present invention;

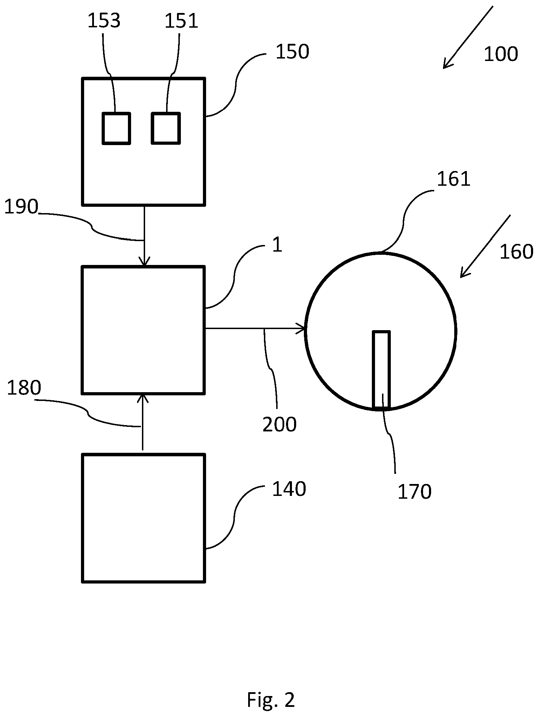

Fig. 2 diagrammatically shows a system according to the present invention.

The metering device 1 for metering a sealant for sealing a sewer wall is provided with a housing 3. The housing 3 comprises a first sealant supply 5 and a second sealant supply 7 for separately supplying a sealant to the housing 3. A first sealant component in the form of a synthetic polymer resin can be supplied via the first sealant supply 5. A second sealant component in the form of a hardener can be supplied via the second sealant supply 7. An inhibiting device 19 is provided in order to release or inhibit the supply of the synthetic polymer resin to a first supply space 17 via the first sealant supply 5 and inhibiting the supply of the hardener to a second supply space 31 via the second sealant supply 7. To this end, the inhibiting device 19 comprises a first inhibiting element formed by a first shut-off valve 9 and a second inhibiting element formed by a second shut-off valve 11. The inhibiting device 19 inhibits discharge of sealant from the first supply space 17 to the first sealant supply 5 and discharge of sealant from the second supply space 31 to the second sealant supply 7. The first shut-off valve 9 and the second shut-off valve 11 are actuated via a first compressed air line 13 and a second compressed air line 15. By increasing the pressure in the first compressed air line 13, the first shut-off valve 9 and the second shut-off valve 11 move from a position in which the first shut-off valve 9 and the second shut-off valve 11 seal the first sealant supply 5 and the second sealant supply 7, respectively, to a position in which the first sealant supply 5 and the second sealant supply 7 are unblocked for the supply of the synthetic polymer resin to the first supply space 17 and the hardener to the second supply space 31. By increasing the pressure in the second compressed air line 15, the first shut-off valve 9 and the second shut-off valve 11 move from the position in which the first shut-off valve 9 and the second shut-off valve 11 unblock the first sealant supply 5 and the second sealant supply 7, respectively, to the position in which the first sealant supply 5 and the second sealant supply 7 are closed off. The housing 3 is furthermore provided with a sealant discharge 21 which is connected to the first and second supply space 17, 31 for fluid flow. The sealant discharge 21 comprises a first outlet opening 23 for the synthetic polymer resin and a second outlet opening 25 for the hardener. The sealant discharge 21 comprises fastening means and connecting means (not shown) which are configured for discharging sealant from the first supply space 17 and second supply space 31 and supplying it to the sewer wall. The housing 3 is provided with a first flushing agent supply opening 27 and a second flushing agent supply opening 29. For fluid flow, the first flushing agent supply opening 27 and the second flushing agent supply opening 29 are connected to the first outlet opening 23 and the second outlet opening 25, respectively, via the first supply space 17 and the second supply space 31, respectively.

System 100 for sealing a sewer wall is provided with a metering device 1. For fluid flow, the metering device 1 is connected, via a first connection 180, to a sealant supply device 140 which is configured for supplying sealant to the first sealant supply 5 and the second sealant supply 7 of the metering device 1. For fluid flow, a flushing agent supply device 150 is connected to the metering device 1 via a second connection 190 for supplying flushing agent, formed by water, to the first supply space 17 and the second supply space 31 of the metering device 1. The flushing agent supply device 150 comprises pressure means 151 and heating means 153 for supplying pressurized heated water to the metering device 1. System 100 comprises a sealing device 160 which is configured for sealing a sewer wall (not shown) using an inflatable flexible bearing member 161 from space surrounded by the sewer wall. A conveyor means 170 is provided for conveying the sealing device 160 through the sewer (not shown).

Using a system 100 according to the second aspect of the present invention, it is possible to seal a sewer wall in the manner described below. Arranging the sealing device 160 in the sewer at the location of a part of the sewer wall to be sealed and supplying sealant using the sealant supply device 140 to the metering device 1 via the first sealant supply 5 and the second sealant supply 7. The sealing device 160 is arranged in such a way that the sealing device 160 at least partly delimits a part of the wall which is to be sealed using sealant by inflating the flexible bearing member 161. Subsequently, the metering device 1 is used to meter sealant to the part of the wall delimited by the bearing member 161 via a third connection 200 in order to achieve sealing of the wall. After the sealant has been metered, the part of the sewer wall is cleared of the bearing member 161 and the sealing device 160 is displaced in the sewer. After metering sealant using the metering device 1, the flushing agent supply device 150 is used to supply water to the metering device 1 via the first flushing agent supply opening 27 and second flushing agent supply opening 29 in order to remove sealant which is present in the first supply space 17, the second supply space 31 and the sealant discharge 21 of the metering device 1, respectively, via the first outlet opening 23 and the second outlet opening 25. The water is supplied during a period of from 10 to 20 seconds at a pressure in the range from 60 to 200 bar and at a temperature of 40 degrees Celsius.

## Claims

1. Metering device (1) for metering a sealant for sealing a sewer wall, the metering device comprising a housing (3) which is provided with a sealant supply and a sealant discharge (21), wherein the sealant supply is configured for supplying sealant to a supply space provided in the housing and the sealant discharge is configured for discharging sealant from the supply space and supplying it to the sewer wall, wherein an inhibiting device (19) is provided for inhibiting the supply of sealant from the supply space to the sealant supply, wherein the metering device comprises a flushing agent supply which is configured for supplying flushing agent to the supply space and the sealant discharge for removing sealant which is present in the supply space and the sealant discharge,
wherein the sealant supply comprises a first sealant supply (5) and a second sealant supply (7) which are configured for separately supplying a first sealant component via the first sealant supply and a second sealant component via the second sealant supply to the supply space,
wherein the supply space comprises a first supply space (17) and a second supply space (31) which is separate from the first supply space, wherein the first sealant supply is configured for supplying the first sealant component to the first supply space and the second sealant supply is configured for supplying the second sealant component to the second supply space.

2. Metering device according to Claim 1, wherein the inhibiting device (19) comprises a first inhibiting element (9) and a second inhibiting element (11), wherein the first inhibiting element is configured for inhibiting the supply of sealant from the supply space to the first sealant supply and the second inhibiting element is configured for inhibiting the supply of sealant from the supply space to the second sealant supply.

3. System (100) for sealing a sewer wall, the system comprising:
- a metering device (1) according to Claim 1 or Claim 2,
- a sealant supply device (140) which is configured for supplying sealant to the metering device,
- a flushing agent supply device (150) which is configured for supplying flushing agent to the supply space of the metering device; and
- a sealing device (160) which is configured for sealing the wall from a space surrounded by the sewer wall.

4. System according to Claim 3, wherein the sealing device comprises a bearing member (161) which is configured for sealingly bearing against the wall, substantially in a peripheral direction, wherein the bearing member is connected to the sealant discharge for supplying sealant to a part of the wall delimited by the bearing member.

5. System according to Claim 4, wherein the bearing member (161) comprises an inflatable body which is configured to bear against the wall in its inflated state.

6. System according to any of Claims 3 to 5, wherein the flushing agent supply device (150) is provided with pressure means (151) and heating means (153) for supplying a pressurized heated flushing agent to the metering device.

7. Use of the metering device according to Claim 1 or Claim 2 for sealing a sewer wall.

8. Method for sealing a sewer using a system for sealing a sewer wall, wherein the sewer comprises a sewer wall comprising a part to be sealed, the system comprising:
- a metering device (1) comprising a housing (3) which is provided with a sealant supply and a sealant discharge (21), wherein the sealant supply is configured for supplying sealant to a supply space provided in the housing and the sealant discharge is configured for discharging sealant from the supply space and supplying it to the sewer wall, wherein an inhibiting device (19) is provided for inhibiting the supply of sealant from the supply space to the sealant supply, **characterized in that** the metering device comprises a flushing agent supply which is configured for supplying flushing agent to the supply space and the sealant discharge for removing sealant which is present in the supply space and the sealant discharge,
- a sealant supply device (140) which is configured for supplying sealant to the metering device,
- a flushing agent supply device (150) which is configured for supplying flushing agent to the supply space of the metering device; and
- a sealing device (160) which is configured for sealing the wall from a space surrounded by the sewer wall,
the method comprising the following steps:
a) arranging the sealing device (160) in the sewer at the location of the part of the sewer wall to be sealed, wherein the sealing device delimits at least partly a part of the wall to be sealed using sealant;
b) supplying of sealant to the metering device (1) using the sealant supply device (140);
c) metering sealant using the metering device (1) at the part of the wall delimited by the sealing device for achieving the sealing of the wall;
d) clearing the part of the sewer wall of the sealing device (160);
e) supplying flushing agent to the metering device (1) after metering sealant using the flushing agent supply device (150) for removing sealant situated in the supply space and the sealant discharge of the metering device, **characterized in that** the flushing agent comprises water during step e) and/or **in that** the metering device is according to Claim 1 or Claim 2.

9. Method according to Claim 8, wherein the metering device is according to Claim 1 or Claim 2.

10. Method according to Claim 9, wherein the sealing device is displaced in the sewer after step d) or e) and the steps a) to d) are carried out again.

11. Method according to any of Claims 9 and 10, wherein the flushing agent has a temperature in the range from 50 to 90 degrees Celsius during step e).

12. Method according to any of Claims 9, 10 and 11, wherein the flushing agent is supplied at a pressure in the range from 60 to 200 bar to the metering device during step e).

13. Method according to any of Claims 9-12 wherein the first sealant component comprises a resin or a synthetic resin, and wherein the second sealant component comprises a hardener.

14. Method according to any of Claims 8 to 13, wherein the flushing agent comprises water during step e).

## Patentansprüche

1. Dosiervorrichtung (1) zum Dosieren eines Dichtmittels zum Abdichten einer Kanalwand, wobei die Dosiervorrichtung ein Gehäuse (3) umfasst, das mit einer Dichtmittelzufuhr und einer Dichtmittelabgabe (21) versehen ist, wobei die Dichtmittelzufuhr dazu ausgelegt ist, Dichtmittel zu einem im Gehäuse vorgesehenen Zuführraum zuzuführen und die Dichtmittelabgabe dazu ausgelegt ist, Dichtmittel aus dem Zuführraum abzugeben und zur Kanalwand zuzuführen, wobei eine Sperrvorrichtung (19) zum Sperren der Zufuhr von Dichtmittel aus dem Zuführraum zur Dichtmittelzufuhr vorgesehen ist, wobei die Dosiervorrichtung eine Spülmittelzufuhr umfasst, die zum Zuführen von Spülmittel zu dem Zuführraum und der Dichtmittelabgabe zum Entfernen von in dem Zuführraum vorhandenem Dichtmittel und der Dichtmittelabgabe ausgebildet ist,
wobei die Dichtmittelzufuhr eine erste Dichtmittelzufuhr (5) und eine zweite Dichtmittelzufuhr (7) umfasst, die dazu ausgelegt sind, eine erste Dichtmittelkomponente über die erste Dichtmittelzufuhr und eine zweite Dichtmittelkomponente über die zweite Dichtmittelzufuhr zu dem Zuführraum getrennt zuzuführen,
wobei der Zuführraum einen ersten Zuführraum (17) und einen zweiten Zuführraum (31) umfasst, der von dem ersten Zuführraum getrennt ist, wobei die erste Dichtmittelzufuhr dazu ausgelegt ist, die erste Dichtmittelkomponente zu dem ersten Zuführraum zuzuführen und die zweite Dichtmittelzufuhr dazu ausgelegt ist, die zweite Dichtmittelkomponente zu dem zweiten Zuführraum zuzuführen.

2. Dosiervorrichtung nach Anspruch 1, wobei die Sperrvorrichtung (19) ein erstes Sperrelement (9) und ein zweites Sperrelement (11) umfasst, wobei das erste Sperrelement dazu ausgelegt ist, die Zufuhr von Dichtmittel aus dem Zuführraum zu der ersten Dichtmittelzufuhr zu sperren und das zweite Sperrelement dazu ausgelegt ist, die Zufuhr von Dichtmittel aus dem Zuführraum zu der zweiten Dichtmittelzufuhr zu sperren.

3. System (100) zum Abdichten einer Kanalwand, wobei das System umfasst:
- eine Dosiervorrichtung (1) nach Anspruch 1 oder Anspruch 2,
- eine Dichtmittelzufuhrvorrichtung (140), die dazu ausgelegt ist, Dichtmittel zu der Dosiervorrichtung zuzuführen,
- eine Spülmittelzufuhrvorrichtung (150), die dazu ausgelegt ist, Spülmittel zu dem Zuführraum der Dosiervorrichtung zuzuführen; und
- eine Dichtungsvorrichtung (160), die dazu ausgelegt ist, die Wand eines von der Kanalwand umgebenen Raumes abzudichten.

4. System nach Anspruch 3, wobei die Dichtungsvorrichtung ein Lagerelement (161) umfasst, das dazu ausgelegt ist, an die Wand abdichtend, im Wesentlichen in einer Umfangsrichtung, anzuliegen, wobei das Lagerelement mit der Dichtmittelabgabe zum Zuführen von Dichtmittel zu einem Teil der Wand verbunden ist, die durch das Lagerelement begrenzt ist.

5. System nach Anspruch 4, wobei das Lagerelement (161) einen aufblasbaren Körper umfasst, der so ausgelegt ist, dass er in seinem aufgeblasenen Zustand an der Wand anliegt.

6. System nach einem der Ansprüche 3 bis 5, wobei die Spülmittelzufuhrvorrichtung (150) mit Druckmitteln (151) und Heizmitteln (153) zum Zuführen eines unter Druck stehenden erhitzten Spülmittels zu der Dosiervorrichtung versehen ist.

7. Verwendung der Dosiervorrichtung nach Anspruch 1 oder Anspruch 2 zum Abdichten einer Kanalwand.

8. Verfahren zum Abdichten eines Kanals unter Verwendung eines Systems zum Abdichten einer Kanalwand, wobei der Kanal eine Kanalwand umfasst, die ein abzudichtendes Teil umfasst, wobei das System umfasst:
- eine Dosiervorrichtung (1), wobei die Dosiervorrichtung ein Gehäuse (3) umfasst, das mit einer Dichtmittelzufuhr und einer Dichtmittelabgabe (21) versehen ist, wobei die Dichtmittelzufuhr dazu ausgelegt ist, Dichtmittel zu einem im Gehäuse vorgesehenen Zuführraum zuzuführen und die Dichtmittelabgabe dazu ausgelegt ist, Dichtmittel aus dem Zuführraum abzugeben und zur Kanalwand zuzuführen, wobei eine Sperrvorrichtung (19) zum Sperren der Zufuhr von Dichtmittel aus dem Zuführraum zur Dichtmittelzufuhr vorgesehen ist, **dadurch gekennzeichnet, dass** die Dosiervorrichtung eine Spülmittelzufuhr umfasst, die zum Zuführen von Spülmittel zu dem Zuführraum und der Dichtmittelabgabe zum Entfernen von in dem Zuführraum vorhandenem Dichtmittel und der Dichtmittelabgabe ausgebildet ist,
- eine Dichtmittelzufuhrvorrichtung (140), die dazu ausgelegt ist, Dichtmittel zu der Dosiervorrichtung zuzuführen,
- eine Spülmittelzufuhrvorrichtung (150), die dazu ausgelegt ist, Spülmittel zu dem Zuführraum der Dosiervorrichtung zuzuführen; und
- eine Dichtungsvorrichtung (160), die dazu ausgelegt ist, die Wand eines von der Kanalwand umgebenen Raumes abzudichten,
wobei das Verfahren die folgenden Schritte umfasst:
a) Anordnen der Dichtungsvorrichtung (160) im Kanal an der Stelle des abzudichtenden Teils der Kanalwand, wobei die Dichtungsvorrichtung wenigstens teilweise einen abzudichtenden Teil der Wand mit Dichtmittel begrenzt;
b) Zuführen von Dichtmittel zu der Dosiervorrichtung (1) unter Verwendung der Dichtmittelzufuhrvorrichtung (140);
c) Dosieren von Dichtmittel unter Verwendung der Dosiervorrichtung (1) an dem durch die Dichtungsvorrichtung begrenzten Teil der Wand, um die Abdichtung der Wand zu erreichen;
d) Freimachen des Teils der Kanalwand von der Dichtungsvorrichtung (160);
e) Zuführen von Spülmittel zu der Dosiervorrichtung (1) nach dem Dosieren von Dichtmittel unter Verwendung der Spülmittelzufuhrvorrichtung (150) zum Entfernen von im Zuführraum befindlichem Dichtmittel und der Dichtmittelabgabe der Dosiervorrichtung, **dadurch gekennzeichnet, dass** das Spülmittel bei Schritt e) Wasser umfasst und/oder dass die Dosiervorrichtung nach Anspruch 1 oder Anspruch 2 ist.

9. Verfahren nach Anspruch 8, wobei die Dosiervorrichtung nach Anspruch 1 oder Anspruch 2 ist.

10. Verfahren nach Anspruch 9, wobei die Dichtungsvorrichtung nach Schritt d) oder e) im Kanal verschoben wird und die Schritte a) bis d) erneut durchgeführt werden.

11. Verfahren nach einem der Ansprüche 9 und 10, wobei das Spülmittel bei Schritt e) eine Temperatur im Bereich von 50 bis 90 Grad Celsius aufweist.

12. Verfahren nach einem der Ansprüche 9, 10 und 11, wobei das Spülmittel bei Schritt e) mit einem Druck im Bereich von 60 bis 200 bar der Dosiervorrichtung zugeführt wird.

13. Verfahren nach einem der Ansprüche 9 bis 12, wobei die erste Dichtungskomponente ein Harz oder ein synthetisches Harz umfasst und wobei die zweite Dichtmittelkomponente einen Härter umfasst.

14. Verfahren nach einem der Ansprüche 8 bis 13, wobei das Spülmittel bei Schritt e) Wasser umfasst.

## Revendications

1. Dispositif de dosage (1) pour doser un produit d'étanchéité pour sceller une paroi d'égout, le dispositif de dosage comprenant un boîtier (3) qui est pourvu d'une alimentation en produit d'étanchéité et d'une décharge de produit d'étanchéité (21), dans lequel l'alimentation en produit d'étanchéité est configurée pour fournir un produit d'étanchéité à un espace d'alimentation prévu dans le boîtier et la décharge de produit d'étanchéité est configurée pour décharger le produit d'étanchéité de l'espace d'alimentation et l'acheminer vers la paroi d'égout, dans lequel un dispositif d'inhibition (19) est prévu pour empêcher l'alimentation en produit d'étanchéité de l'espace d'alimentation vers le alimentation en produit d'étanchéité, dans lequel le dispositif de dosage comprend une alimentation en agent de rinçage qui est configurée pour fournir un agent de rinçage à l'espace d'alimentation et la décharge de produit d'étanchéité pour retirer le produit d'étanchéité qui est présent dans l'espace d'alimentation et la décharge de produit d'étanchéité,
dans lequel l'alimentation en produit d'étanchéité comprend une première alimentation en produit d'étanchéité (5) et une deuxième alimentation en produit d'étanchéité (7) qui sont configurées pour fournir séparément un premier composant de produit d'étanchéité via la première alimentation en produit d'étanchéité et un deuxième composant de produit d'étanchéité via la deuxième alimentation en produit d'étanchéité vers l'espace d'alimentation,
dans lequel l'espace d'alimentation comprend un premier espace d'alimentation (17) et un deuxième espace d'alimentation (31) qui est séparé du premier espace d'alimentation, dans lequel la première alimentation en produit d'étanchéité est configurée pour alimenter le premier composant de produit d'étanchéité au premier espace d'alimentation et la deuxième alimentation en produit d'étanchéité est configurée pour fournir le deuxième composant de produit d'étanchéité au deuxième espace d'alimentation.

2. Dispositif de dosage selon la revendication 1, dans lequel le dispositif d'inhibition (19) comprend un premier élément d'inhibition (9) et un deuxième élément d'inhibition (11), dans lequel le premier élément d'inhibition est configuré pour inhiber l'alimentation en produit d'étanchéité à partir de l'espace d'alimentation, à la première alimentation en produit d'étanchéité et le deuxième élément d'inhibition est configuré pour empêcher l'alimentation en produit d'étanchéité de l'espace d'alimentation à la deuxième alimentation en produit d'étanchéité.

3. Système (100) pour l'étanchéification d'une paroi d'égout, le système comprenant : un dispositif de dosage (1) selon la revendication 1 ou la revendication 2,
un dispositif d'alimentation en produit d'étanchéité (140) qui est configuré pour alimenter en produit d'étanchéité le dispositif de dosage,
un dispositif d'alimentation en agent de rinçage (150) qui est configuré pour fournir un agent de rinçage à l'espace d'alimentation du dispositif de dosage ; et
un dispositif d'étanchéification (160) qui est configuré pour sceller la paroi d'un espace qui est entouré par la paroi d'égout.

4. Système selon la revendication 3, dans lequel le dispositif d'étanchéification comprend un élément d'appui (161) qui est configuré pour s'appuyer de manière étanche contre la paroi, sensiblement dans une direction périphérique, dans lequel l'élément d'appui est relié à la décharge de produit d'étanchéité pour fournir du produit d'étanchéité à un partie de la paroi délimitée par l'élément d'appui.

5. Système selon la revendication 4, dans lequel l'élément d'appui (161) comprend un corps gonflable qui est configuré pour prendre appui contre la paroi dans son état gonflé.

6. Système selon l'une quelconque des revendications 3 à 5, dans lequel le dispositif d'alimentation en agent de rinçage (150) est pourvu de moyens de pression (151) et de moyens de chauffage (153) pour fournir un agent de rinçage chauffé sous pression au dispositif de dosage.

7. Utilisation du dispositif de dosage selon la revendication 1 ou la revendication 2 pour sceller une paroi d'égout.

8. Procédé d'étanchéification d'un égout utilisant un système d'étanchéification d'une paroi d'égout, dans lequel l'égout comprend une paroi d'égout comprenant une partie à étanchéifier, le système comprenant :
un dispositif de dosage (1) comprenant un boîtier (3) qui est pourvu d'une alimentation en produit d'étanchéité et d'une décharge de produit d'étanchéité (21), dans lequel l'alimentation en produit d'étanchéité est configurée pour fournir un produit d'étanchéité à un espace d'alimentation prévu dans le boîtier et la décharge de produit d'étanchéité est configurée pour décharger le produit d'étanchéité de l'espace d'alimentation et l'acheminer vers la paroi d'égout, dans lequel un dispositif d'inhibition (19) est prévu pour empêcher l'alimentation en produit d'étanchéité de l'espace d'alimentation vers le alimentation en produit d'étanchéité, **caractérisé en ce que** le dispositif de dosage comprend une alimentation en agent de rinçage qui est configurée pour fournir un agent de rinçage à l'espace d'alimentation et la décharge de produit d'étanchéité pour retirer le produit d'étanchéité qui est présent dans l'espace d'alimentation et la décharge de produit d'étanchéité,
un dispositif d'alimentation en produit d'étanchéité (140) qui est configuré pour alimenter en produit d'étanchéité le dispositif de dosage,
un dispositif d'alimentation en agent de rinçage (150) qui est configuré pour fournir un agent de rinçage à l'espace d'alimentation du dispositif de dosage ; et
un dispositif d'étanchéification (160) qui est configuré pour sceller la paroi d'un espace qui est entouré par la paroi d'égout, le procédé comprenant les étapes suivantes consistant à :
a) disposer le dispositif d'étanchéification (160) dans l'égout à l'emplacement de la partie de la paroi d'égout à étanchéifier, le dispositif d'étanchéification délimitant au moins partiellement une partie de la paroi à étanchéifier à l'aide d'un produit d'étanchéité ;
b) fournir le produit d'étanchéité au dispositif de dosage (1) à l'aide du dispositif d'alimentation en produit d'étanchéité (140) ;
c) doser le produit d'étanchéité à l'aide du dispositif de dosage (1) au niveau de la partie de la paroi délimitée par le dispositif d'étanchéification pour réaliser l' étanchéification de la paroi ;
d) dégager la partie de la paroi d'égout du dispositif d'étanchéification (160) ;
e) fournir de l'agent de rinçage au dispositif de dosage (1) après dosage du produit d'étanchéité en utilisant le dispositif d'alimentation en agent de rinçage (150) pour enlever le produit d'étanchéité situé dans l'espace d'alimentation et la décharge de produit d'étanchéité du dispositif de dosage, **caractérisé en ce que** l'agent de rinçage comprend de l'eau pendant étape e) et/ou **en ce que** le dispositif de dosage est selon la revendication 1 ou la revendication 2.

9. Procédé selon la revendication 8, dans lequel le dispositif de dosage est selon la revendication 1 ou la revendication 2.

10. Procédé selon la revendication 9, dans lequel le dispositif d'étanchéification est déplacé dans l'égout après l'étape d) ou e) et les étapes a) à d) sont à nouveau réalisées.

11. Procédé selon l'une quelconque des revendications 9 et 10, dans lequel l'agent de rinçage a une température dans la plage de 50 à 90 degrés Celsius lors de l'étape e).

12. Procédé selon l'une quelconque des revendications 9, 10 et 11, dans lequel l'agent de rinçage est fourni à une pression dans la plage de 60 à 200 bars au dispositif de dosage lors de l'étape e).

13. Procédé selon l'une quelconque des revendications 9 à 12, dans lequel le premier composant d'étanchéité comprend une résine ou une résine synthétique, et dans lequel le deuxième composant d'étanchéité comprend un durcisseur.

14. Procédé selon l'une quelconque des revendications 8 à 13, dans lequel l'agent de rinçage comprend de l'eau lors de l'étape e).
